# EUROPÄISCHE PATENTANMELDUNG

(11) **EP 2 605 041 A1**
(43) Veröffentlichungstag der Anmeldung: **19.06.2013**
(21) Anmeldenummer: 12190611.9
(22) Anmeldetag: 30.10.2012
(51) Int. Cl.: G01S 17/46, G01S 17/02

(54) **Handentfernungsmessgerät**

(30) Priorität: 13.12.2011 DE 102011088367; 22.08.2012 DE 102012214880
(71) Anmelder: ROBERT BOSCH GMBH, 70442 Stuttgart (DE)
(72) Erfinder: Abraham, Steffen, 31134 Hildesheim (DE); Roland, Matthias, 30451 Hannover (DE); Pfeil, Andreas, 77815 Buehl (DE)

(57) **Zusammenfassung**

Die Erfindung geht aus von einem Handentfernungsmessgerät mit zumindest einer Recheneinheit (12), einem Bilderfassungsmittel (14) und einer Lasermessvorrichtung (16), die bei einem Messvorgang eine Entfernung (18) eines Messpunkts (20) an einem Messobjekt (22) in einer Messrichtung (24) ermittelt.

Es wird vorgeschlagen, dass die Recheneinheit (12) dazu vorgesehen ist, die Messrichtung (24) zumindest von einer Ausgangskenngröße des Bilderfassungsmittels (14) abhängig zumindest zu steuern.

## Beschreibung

### Stand der Technik

Es ist bereits ein Handentfernungsmessgerät mit zumindest einer Recheneinheit, einem Bilderfassungsmittel und einer Lasermessvorrichtung, die bei einem Messvorgang eine Entfernung eines Messpunkts an einem Messobjekt in einer Messrichtung ermittelt, vorgeschlagen worden.

### Offenbarung der Erfindung

Die Erfindung geht aus von einem Handentfernungsmessgerät mit zumindest einer Recheneinheit, einem Bilderfassungsmittel und einer Lasermessvorrichtung, die bei einem Messvorgang eine Entfernung eines Messpunkts an einem Messobjekt in einer Messrichtung ermittelt.

Es wird vorgeschlagen, dass die Recheneinheit dazu vorgesehen ist, die Messrichtung zumindest von einer Ausgangskenngröße des Bilderfassungsmittels abhängig zumindest zu steuern. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Insbesondere soll unter einem "Bilderfassungsmittel" ein Mittel verstanden werden, das ein zumindest zweidimensionales Abbild von wenigstens einem Teil des Messobjekts erfasst. Bevorzugt erfasst das Bilderfassungsmittel das Abbild des Messobjekts in einem sichtbaren Lichtbereich. Vorzugsweise weist das Bilderfassungsmittel einen CCD-Sensor und/oder einen CMOS-Sensor auf. Vorzugsweise weist das Bilderfassungsmittel eine Bildwiederholungsrate zwischen 10 und 100 Hz auf. Vorzugsweise speichert die Recheneinheit bei jedem Messvorgang neben einer gemessenen Entfernung in Messrichtung zumindest ein von dem Bilderfassungsmittel aufgenommenes Bild und vorteilhaft eine Messrichtung relativ zu einem Gerätegehäuse des Handentfernungsmessgeräts. Unter einer "Lasermessvorrichtung" soll insbesondere eine Vorrichtung verstanden werden, die zumindest einen Laserstrahl in die Messrichtung ausstrahlt und von dem Messobjekt reflektiertes Licht des Laserstrahls empfängt. Vorzugsweise strahlt die Lasermessvorrichtung einen sichtbaren Laserstrahl aus. Vorteilhaft weist die Lasermessvorrichtung einen Laser und einen insbesondere eindimensionalen optischen Sensor auf. Vorzugsweise empfängt der optische Sensor einen von dem Messobjekt reflektierten Teil des Laserstrahls. Vorzugsweise erfasst der optische Sensor den reflektierten Teil des Laserstrahls kontinuierlich. Bevorzugt weist das Handentfernungsmessgerät einen Analog-Digital-Wandler auf, der ein von dem optischen Sensor ausgegebenes Signal, bevorzugt nach einer Frequenzverschiebung und/oder insbesondere einer Demodulation, quantisiert. Der Analog-Digital-Wandler weist vorteilhaft eine Abtastrate auf, die höher ist als eine Bildwiederholungsrate des Bilderfassungsmittels. Insbesondere weist der Analog-Digital-Wandler eine Abtastrate größer als 100 kHz, bevorzugt größer als 1 MHz, besonders bevorzugt größer als 10 MHz auf. Insbesondere soll unter einem "Messpunkt" ein Punkt auf einer Oberfläche des Messobjekts verstanden werden, der den Laserstrahl reflektiert. Unter einer "Messrichtung" soll insbesondere eine Richtung relativ zu der Lasermessvorrichtung verstanden werden, in der ein Abstand zwischen der Lasermessvorrichtung und dem Messobjekt bestimmt wird. Unter der Wendung "eine Entfernung ermitteln" soll insbesondere verstanden werden, dass die Lasermessvorrichtung eine Kenngröße ausgibt, die von einem Abstand des Messpunkts von der Lasermessvorrichtung abhängig ist. Vorteilhaft erzeugt die Lasermessvorrichtung die Kenngröße auf eine, dem Fachmann als sinnvoll erscheinende Art. Besonders vorteilhaft bestimmt die Lasermessvorrichtung die Kenngröße aus einer Laufzeit des Laserstrahls. Unter "vorgesehen" soll insbesondere speziell programmiert, ausgelegt und/oder ausgestattet verstanden werden. Insbesondere soll unter einer "Ausgangskenngröße des Bilderfassungsmittels" ein Signal verstanden werden, das das Bilderfassungsmittel ausgibt. Vorzugsweise weist die Ausgangskenngröße digital codierte Informationen, die insbesondere ein Bild beschreiben, auf. Bevorzugt gibt das Bilderfassungsmittel die Ausgangskenngröße über einen drahtgebundenen Datenbus aus. Vorteilhaft transportiert die Ausgangskenngröße wenigstens eine Information über insbesondere zwei Dimensionen des Messobjekts. Unter der Wendung "von einer Ausgangskenngröße abhängig" soll insbesondere verstanden werden, dass die Recheneinheit die Ausgangskenngröße auswertet und von der Auswertung abhängig die Messrichtung einstellt. Insbesondere soll unter "zumindest zu steuern" verstanden werden, dass die Recheneinheit steuert und/oder vorteilhaft regelt. Durch die erfindungsgemäße Ausgestaltung des Handentfernungsmessgeräts kann die Messrichtung vorteilhaft schnell und besonders genau verändert werden, wobei auf eine Ausgangskenngröße des Bilderfassungsmittels zurückgegriffen werden kann. Insbesondere kann mittels des Bilderfassungsmittels eine Messrichtung kontrolliert und dokumentiert werden. Des Weiteren können Messungen besonders vorteilhaft reproduziert werden.

In einer weiteren Ausgestaltung wird vorgeschlagen, dass die Lasermessvorrichtung zumindest eine Messrichtungseinstelleinheit aufweist, die in zumindest einem Betriebszustand die Messrichtung verändert, wodurch eine automatische Ausrichtung der Messrichtung vorteilhaft möglich ist. Unter einer "Messrichtungseinsteiieinheit" soll insbesondere eine Einheit verstanden werden, die zumindest einen Aktuator aufweist, der eine Richtung beeinflusst, in die die Lasermessvorrichtung den Laserstrahl relativ zu dem Gerätegehäuse des Handentfernungsmessgeräts aussendet. Vorzugsweise ist die Messrichtungseinstelleinheit dazu vorgesehen, die Messrichtung um einen maximalen Messwinkel, der weniger als 45 Grad, vorzugsweise weniger als 20 Grad, besonders bevorzugt weniger als 10 Grad beträgt, zu verändern. Vorzugsweise weist die Messrichtungseinstelleinheit wenigstens einen, dem Fachmann als sinnvoll erscheinenden Aktor auf, bevorzugt jedoch einen elektromechanischen Aktor und/oder einen mikromechanischen Aktor. Vorteilhaft bewegt der Aktor den Laser, eine Optik der Lasermessvorrichtung, insbesondere einen Mikrospiegel, den optischen Sensor und/oder eine Optik des optischen Sensors. Insbesondere bewegt der Aktor den Laser, insbesondere das Bilderfassungsmittel und den Mikrospiegel, vorteilhaft relativ zu dem Gerätegehäuse. Bevorzugt ist die Messrichtungseinstelleinheit dazu vorgesehen, die Messrichtung um eine Achse zu schwenken. Alternativ könnte eine Messrichtungseinstelleinheit dazu vorgesehen sein, die Messrichtungseinstelleinheit um zwei Achsen zu schwenken, die vorzugsweise senkrecht zueinander ausgerichtet sind. Insbesondere soll unter einem "Gerätegehäuse" eine Einheit verstanden werden, die mehrere in einem Innenraum des Gerätegehäuses angeordnete Baugruppen mechanisch verbindet. Vorzugsweise greift ein Bediener bei einem Messvorgang das Gerätegehäuse. Unter der Wendung "die Messrichtung verändern" soll insbesondere verstanden werden, dass die Messrichtungseinstelleinheit die Richtung relativ zu dem Gerätegehäuse, in die die Lasermessvorrichtung den Laserstrahl aussendet, verändert.

Des Weiteren wird vorgeschlagen, dass die Recheneinheit dazu vorgesehen ist, aus der Ausgangskenngröße des Bilderfassungsmittels wenigstens eine Ausrichtungsänderung relativ zu dem Messobjekt zu bestimmen, wodurch eine Bewegung des Gerätegehäuses, beispielsweise durch ein Zittern des Bedieners verursacht, vorteilhaft kompensiert werden kann. Des Weiteren kann eine durch die Ausrichtungsänderung verursachte Fehlmessung diagnostiziert und/oder dokumentiert werden. Insbesondere soll unter "eine Ausrichtungsänderung bestimmen" verstanden werden, dass die Recheneinheit zumindest eine Drehung wenigstens des Bilderfassungsmittels und/oder vorteilhaft des Gerätegehäuses relativ zu dem Messobjekt erfasst. Vorzugsweise ist die Recheneinheit dazu vorgesehen, eine Bewegung wenigstens des Bilderfassungsmittels relativ zu dem Messobjekt zu bestimmen. Vorzugsweise bestimmt die Recheneinheit die Ausrichtungsänderung durch einen Vergleich zweier Bilder, die das Bilderfassungsmittel aufgenommen hat. Vorzugsweise weist die Recheneinheit eine bildbasierte Merkmalsdetektion auf, insbesondere über zumindest einen, dem Fachmann als sinnvoll erscheinenden Interest-Operator und/oder über ein Verfahren zur Bestimmung einer Verschiebung der Bildmerkmale, wie beispielsweise ein Korrelationsverfahren.

Ferner wird vorgeschlagen, dass die Recheneinheit dazu vorgesehen ist, aus der Ausgangskenngröße des Bilderfassungsmittels eine Messrichtung zu bestimmen, in der ein Strukturelement des Messobjekts angeordnet ist, wodurch vorteilhaft ein Winkel zwischen einer aktuellen Messrichtung und der Messrichtung zum Strukturelement bestimmt werden kann. Unter einem "Struktureiement" soll insbesondere ein Bereich des Messobjekts verstanden werden, der mit dem Bilderfassungsmittel von anderen Bereichen des Messobjekts unterscheidbar ist. Beispielsweise könnte das Strukturelement als ein Loch, als eine Rille, als eine Kante, als eine Ecke, als ein Farbwechsel und/oder als ein anderes, dem Fachmann als sinnvoll erscheinendes Strukturelement ausgebildet sein. Vorzugsweise trägt der Bediener das Strukturelement mit einem insbesondere im sichtbaren Frequenzbereich unsichtbaren Farbmittel auf das Messobjekt auf.

Zudem wird vorgeschlagen, dass die Recheneinheit dazu vorgesehen ist, die Messrichtung auf das Strukturelement des Messobjekts auszurichten, wodurch der Bediener eine besonders genaue Messung einer Entfernung zu dem Strukturelement komfortabel durchführen kann. Insbesondere soll unter der Wendung "auf das Strukturelement eines Messobjekts ausrichten" verstanden werden, dass die Recheneinheit die Messrichtung der Lasermessvorrichtung auf einen Punkt des Strukturelements ausrichtet. Vorzugsweise richtet die Recheneinheit die Messrichtung auf einen markanten Punkt, beispielsweise auf eine Ecke, auf einen Mittelpunkt und/oder auf einen von einem Bediener auswählbaren Punkt des Strukturelements aus.

Weiterhin wird vorgeschlagen, dass die Recheneinheit dazu vorgesehen ist, die Messrichtung bei einer Gerätebewegung auf das Strukturelement des Messobjekts gerichtet zu halten, wodurch beispielsweise ein Zittern des Bedieners ausgeglichen werden kann. Vorzugsweise hält die Recheneinheit die Messrichtung auf das Strukturelement des Messobjekts gerichtet, zumindest bis der Bediener eine Messung auslöst, bis das Strukturelement einen Blickwinkel des Bilderfassungsmittels verlässt und/oder bis der Bediener den Vorgang durch eine Bedienereingabe abbricht. Unter einer "Gerätebewegung" soll eine Bewegung des Handentfernungsmessgeräts relativ zu dem Messobjekt verstanden werden. Insbesondere soll unter der Wendung "auf das Strukturelement gerichtet halten" verstanden werden, dass die Recheneinheit die Messrichtung auf einen gleichen Punkt des Strukturelements ausrichtet, während der Bediener das Handentfernungsmessgerät bewegt.

In einer vorteilhaften Ausbildung der Erfindung wird vorgeschlagen, dass die Recheneinheit dazu vorgesehen ist, die Messrichtung aus der Ausgangskenngröße des Bilderfassungsmittels zu ermitteln, wodurch konstruktiv einfach auf weitere Sensoren verzichtet werden kann. Unter der Wendung "aus der Ausgangskenngröße ermitteln" soll insbesondere verstanden werden, dass die Recheneinheit die von dem Bilderfassungsmittel aufgenommenen Bilder digital analysiert und aus den Bildern die Messrichtung bestimmt. Insbesondere erfasst das Bilderfassungsmittel eine Reflexion des Laserstrahls an dem Messobjekt. Vorzugsweise berechnet die Recheneinheit einen Winkel in dem an dem Messpunkt reflektiertes Licht auf das Bilderfassungsmittel auftrifft. Vorteilhaft bestimmt die Recheneinheit aus dem Winkel und einer von der Lasermessvorrichtung bestimmten Entfernung die aktuelle Messrichtung der Lasermessvorrichtung. Besonders vorteilhaft regelt die Recheneinheit die Messrichtung so, dass die Messrichtung auf das Strukturelement gerichtet ist. Alternativ könnte die Recheneinheit die Messrichtung auf eine andere, dem Fachmann als sinnvoll erscheinende Art bestimmen. In einer vorteilhaften Ausgestaltung gibt die Recheneinheit eine Messrichtungssteuergröße aus, aufgrund derer die Lasermessvorrichtung die Messrichtung einstellt.

Des Weiteren wird vorgeschlagen, dass das Handentfernungsmessgerät eine Anzeigeeinheit aufweist, die in zumindest einem Betriebszustand zumindest die Ausgangskenngröße des Bilderfassungsmittels einem Bediener darstellt, wodurch der Bediener eine Messrichtung besonders vorteilhaft ermitteln und überprüfen kann. Unter einer "Anzeigeeinheit" soll insbesondere ein, dem Fachmann als sinnvoll erscheinendes Display, vorteilhaft jedoch ein LCD-Display und/oder besonders vorteilhaft ein OLED-Display, verstanden werden. Vorzugsweise ist die Anzeigeeinheit dazu vorgesehen, zumindest ein Bild, bevorzugt in Farbe, darzustellen. Insbesondere soll unter der Wendung "die Ausgangskenngröße des Bilderfassungsmittels darstellen" verstanden werden, dass die Anzeigeeinheit in einem Betriebszustand das von dem Bilderfassungsmittel zuvor aufgenommene Bild, insbesondere live, darstellt.

Ferner wird vorgeschlagen, dass das Handentfernungsmessgerät eine Eingabeeinheit umfasst, über die in zumindest einem Betriebszustand ein Strukturelement des Messobjekts von einem Bediener auswählbar ist, wodurch der Bediener konstruktiv einfach ein Strukturelement auswählen kann, das er vermessen will. Insbesondere soll unter einer "Eingabeeinheit" eine Einheit verstanden werden, die dazu vorgesehen ist, eine Bedienereingabe aufzunehmen. Bevorzugt stellt die Eingabeeinheit eine von der Bedienereingabe abhängige Kenngröße bereit, die besonders bevorzugt die Recheneinheit auswertet. Vorzugsweise weist die Eingabeeinheit ein, dem Fachmann als sinnvoll erscheinendes Eingabemittel, besonders vorteilhaft jedoch eine berührungsempfindliche Displayabdeckung (Touchscreen) auf. Unter der Wendung "von einem Bediener auswählbar" soll insbesondere verstanden werden, dass die Recheneinheit dazu vorgesehen ist, zumindest einer Bedienereingabe ein Strukturelement des Messobjekts zuzuordnen. Vorzugsweise richtet die Recheneinheit die Messrichtung nach der Bedienereingabe auf das durch die Bedienereingabe ausgewählte Strukturelement aus.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung des Ausführungsbeispiels

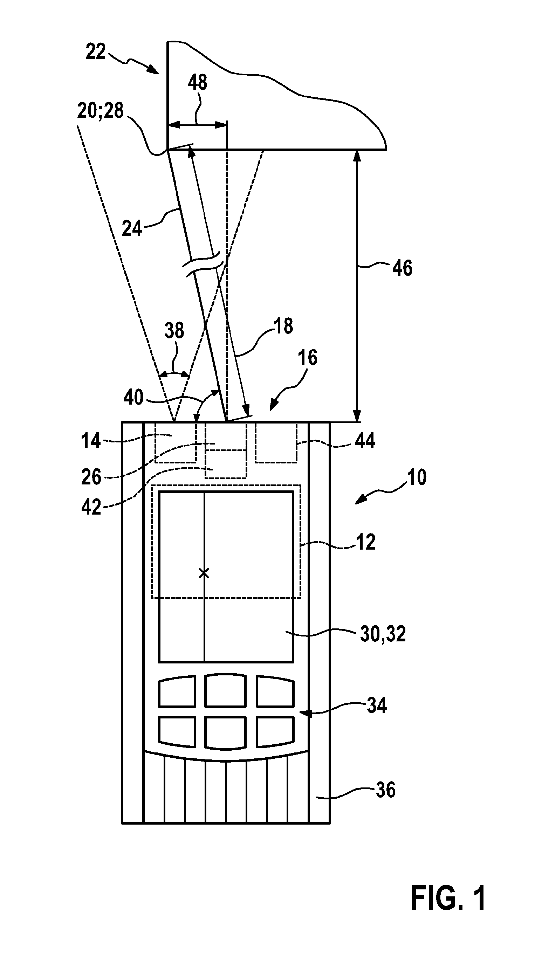

Figur 1 zeigt ein Handentfernungsmessgerät 10 mit einer Recheneinheit 12, einem Bilderfassungsmittel 14, einer Lasermessvorrichtung 16, einer Anzeigeeinheit 30, einer ersten Eingabeeinheit 32, einer zweiten Eingabeeinheit 34 und einem Gerätegehäuse 36. Das Gerätegehäuse 36 umschließt einen Innenraum, in dem die Recheneinheit 12, das Bilderfassungsmittel 14, die Lasermessvorrichtung 16 und die Anzeigeeinheit 30 zumindest teilweise angeordnet sind. Das Gerätegehäuse 36 befestigt zumindest die Recheneinheit 12, das Bilderfassungsmittel 14, die Lasermessvorrichtung 16 und die Anzeigeeinheit 30 zumindest teilweise relativ zueinander. Bei einem Messvorgang greift der Bediener das Gerätegehäuse 36 und richtet eine Seite des Gerätegehäuses 36, an der die Lasermessvorrichtung 16 angeordnet ist, auf ein Messobjekt 22 aus.

Die Recheneinheit 12 ist als ein digitaler Signalprozessor ausgebildet. Alternativ könnte eine Recheneinheit als ein anderer, dem Fachmann als sinnvoll erscheinender Mikroprozessor ausgebildet sein. Das Bilderfassungsmittel 14 weist, hier nicht näher dargestellt, eine Optik und einen Bildsensor auf. Der Bildsensor ist als ein CCD-Sensor ausgebildet. Die Optik ist als ein Teleobjektiv ausgebildet. Vorzugsweise weist das Bilderfassungsmittel 14 einen maximalen Blickwinkel 38 auf, der insbesondere geringfügig größer ist als ein maximaler Messwinkel 40 der Lasermessvorrichtung 16. Das Bilderfassungsmittel 14 gibt bei einem Betrieb eine elektrische Ausgangskenngröße aus, die ein von dem Bilderfassungsmittel 14 aufgenommenes Bild an die Recheneinheit 12 überträgt.

Die Lasermessvorrichtung 16 weist eine Messrichtungseinstelleinheit 26, einen Laser 42 und einen optischen Sensor 44 auf. Der Laser 42 sendet einen, dem Fachmann als sinnvoll erscheinenden modulierten Laserstrahl in eine Messrichtung 24 aus. Das Messobjekt 22 reflektiert an einem Messpunkt 20 einen Teil eines Lichts des Laserstrahls in Richtung des optischen Sensors 44. Des Weiteren reflektiert das Messobjekt 22 einen Teil des Lichts des Laserstrahls in Richtung des Bilderfassungsmittels 14. Der optische Sensor 44 empfängt den reflektierten Teil eines Lichts des Laserstrahls und wandelt ihn in eine elektrische Ausgangskenngröße des optischen Sensors 44 um. Ein hier nicht näher dargestellter Analog-Digital-Wandler des Handentfernungsmessgeräts 10 digitalisiert die Ausgangskenngröße des optischen Sensors 44. Die Recheneinheit 12 ermittelt bei einem Messvorgang eine Entfernung 18 des Messpunkts 20 von dem Gerätegehäuse 36 in der Messrichtung 24.

Die Messrichtungseinstelleinheit 26 umfasst einen hier nicht näher dargestellten Mikrospiegel, der dazu vorgesehen ist, die Messrichtung 24 zu verändern. Dazu ist der Mikrospiegel in einem Strahlengang des Laserstrahls angeordnet. Der Mikrospiegel ist piezoelektrisch angetrieben. Die Messrichtungseinstelleinheit 26 ist dazu vorgesehen, die Messrichtung 24 um zwei Achsen zu schwenken. Die Recheneinheit 12 steuert bei einem Betrieb die Messrichtungseinstelleinheit 26 von einer Ausgangskenngröße des Bilderfassungsmittels 14 abhängig. Dazu bestimmt die Recheneinheit 12 aus der Ausgangskenngröße des Bilderfassungsmittels 14 eine Messrichtung 24, in der ein Strukturelement 28 des Messobjekts 22 angeordnet ist. Die Recheneinheit 12 ermittelt mittels einer Bildkorrelation, und/oder anderer, dem Fachmann als sinnvoll erscheinender Rechenmethoden, in dem Bild vorhandene Strukturelemente 28. Anschließend richtet die Recheneinheit 12 den Laserstrahl und damit die Messrichtung 24 mittels der Messrichtungseinstelleinheit 26 auf eines der Strukturelemente 28 des Messobjekts 22. Das dargestellte Strukturelement 28 ist als eine Kante ausgebildet. Des Weiteren bestimmt die Recheneinheit 12 mittels einer Winkelfunktion eine Entfernung 46 senkrecht zu der Seite des Gerätegehäuses 36, an der die Lasermessvorrichtung 16 angeordnet ist und zumindest eine Entfernung 48 parallel zu der Seite des Gerätegehäuses 36. Vorzugsweise bestimmt die Recheneinheit 12 einen waagrechten und einen senkrechten Anteil der Entfernung 48 relativ zu dem Gerätegehäuses 36 und/oder relativ zu der Schwerkraft.

Des Weiteren ist die Recheneinheit 12 dazu vorgesehen, aus der Ausgangskenngröße des Bilderfassungsmittels 14 wenigstens eine Ausrichtungsänderung relativ zu dem Messobjekt 22 zu bestimmen. Dazu weist die Recheneinheit 12 eine Ausrichtungsänderungserkennungsfunktion auf, die Merkmale und Strukturelemente 28 über mehrere Bilder des Bilderfassungsmittels 14 verfolgt. Die Ausrichtungsänderungserkennungsfunktion umfasst ein Verfahren zur Bildverarbeitung zur Verfolgung markanter Merkmale, hier der Strukturelemente 28, mittels Interest-Operator und Korrelationsverfahren. Die Recheneinheit 12 kompensiert die Ausrichtungsänderung und hält die Messrichtung 24 bei einer Gerätebewegung auf das Strukturelement 28 des Messobjekts 22 gerichtet. Zudem ermittelt die Recheneinheit 12 in einem Betrieb die Messrichtung 24 aus der Ausgangskenngröße des Bilderfassungsmittels 14. Dazu erkennt die Recheneinheit 12 in einem von dem Bilderfassungsmittel 14 aufgenommenen Bild den Messpunkt 20, an dem das Messobjekt 22 einen Teil des Laserstrahls reflektiert. Die Recheneinheit 12 regelt mittels der Messrichtungseinstelleinheit 26 die Messrichtung 24.

Die Anzeigeeinheit 30 stellt bei einem Betrieb die Ausgangskenngröße des Bilderfassungsmittels 14 einem Bediener als Bild dar. Dabei markiert die Recheneinheit 12 die erkannten Strukturelemente 28. Die erste Eingabeeinheit 32 ist als ein Touchscreen ausgebildet. Die zweite Eingabeeinheit 34 weist mehrere Tasten auf. Über die Eingabeeinheiten 32, 34 wählt der Bediener in einem Betriebszustand ein von der Recheneinheit 12 erkanntes Strukturelement 28 des Messobjekts 22 aus. Anschließend richtet die Recheneinheit 12 die Messrichtung 24 auf dieses Strukturelement 28 aus. Wenn der Bediener kein Strukturelement 28 auswählt, wählt die Recheneinheit 12 ein erkanntes Strukturelement 28 des Messobjekts 22 aus, das in einer Nähe des Messpunkts 20 angeordnet ist.

## Patentansprüche

1. Handentfernungsmessgerät mit zumindest einer Recheneinheit (12), einem Bilderfassungsmittel (14) und einer Lasermessvorrichtung (16), die bei einem Messvorgang eine Entfernung (18) eines Messpunkts (20) an einem Messobjekt (22) in einer Messrichtung (24) ermittelt, **dadurch gekennzeichnet, dass** die Recheneinheit (12) dazu vorgesehen ist, die Messrichtung (24) zumindest von einer Ausgangskenngröße des Bilderfassungsmittels (14) abhängig zumindest zu steuern.

2. Handentfernungsmessgerät nach Anspruch 1, **dadurch gekennzeichnet, dass** die Lasermessvorrichtung (16) zumindest eine Messrichtungseinstelleinheit (26) aufweist, die in zumindest einem Betriebszustand die Messrichtung (24) verändert.

3. Handentfernungsmessgerät nach Anspruch 1 oder 2, **dadurch gekennzeichnet, dass** die Recheneinheit (12) dazu vorgesehen ist, aus der Ausgangskenngröße des Bilderfassungsmittels (14) wenigstens eine Ausrichtungsänderung relativ zu dem Messobjekt (22) zu bestimmen.

4. Handentfernungsmessgerät nach einem der vorhergehenden Ansprüche, **dadurch gekennzeichnet, dass** die Recheneinheit (12) dazu vorgesehen ist, aus der Ausgangskenngröße des Bilderfassungsmittels (14) eine Messrichtung (24) zu bestimmen, in der ein Strukturelement (28) des Messobjekts (22) angeordnet ist.

5. Handentfernungsmessgerät nach Anspruch 4, **dadurch gekennzeichnet, dass** die Recheneinheit (12) dazu vorgesehen ist, die Messrichtung (24) auf das Strukturelement (28) des Messobjekts (22) zu richten.

6. Handentfernungsmessgerät zumindest nach Anspruch 4, **dadurch gekennzeichnet, dass** die Recheneinheit (12) dazu vorgesehen ist, die Messrichtung (24) bei einer Gerätebewegung auf das Strukturelement (28) des Messobjekts (22) gerichtet zu halten.

7. Handentfernungsmessgerät nach einem der vorhergehenden Ansprüche, **dadurch gekennzeichnet, dass** die Recheneinheit (12) dazu vorgesehen ist, die Messrichtung (24) aus der Ausgangskenngröße des Bilderfassungsmittels (14) zu ermitteln.

8. Handentfernungsmessgerät nach einem der vorhergehenden Ansprüche, **gekennzeichnet durch** eine Anzeigeeinheit (30), die in zumindest einem Betriebszustand zumindest die Ausgangskenngröße des Bilderfassungsmittels (14) einem Bediener darstellt.

9. Handentfernungsmessgerät nach einem der vorhergehenden Ansprüche, **gekennzeichnet durch** eine Eingabeeinheit (32), über die in zumindest einem Betriebszustand ein Strukturelement (28) des Messobjekts (22) von einem Bediener auswählbar ist.

10. Verfahren mit Handentfernungsmessgerät (10), das zumindest eine Recheneinheit (12), ein Bilderfassungsmittel (14) und eine Lasermessvorrichtung (16) aufweist, die bei einem Messvorgang eine Entfernung (18) eines Messpunkts (20) an einem Messobjekt (22) in einer Messrichtung (24) ermittelt, wobei die Recheneinheit (12) die Messrichtung (24) von einer Ausgangskenngröße des Bilderfassungsmittels (14) abhängig zumindest steuert.
